# EUROPEAN PATENT APPLICATION

(11) **EP 2 590 066 A2**
(43) Date of publication of application: **08.05.2013**
(21) Application number: 12179850.8
(22) Date of filing: 09.08.2012
(51) Int. Cl.: G06F 3/0488

(54) **Electronic device and method of controlling the same**

(30) Priority: 04.11.2011 US 201161555823 P; 20.02.2012 TW 101105403
(71) Applicant: Acer Incorporated, Taipei Hsien 221 (TW)
(72) Inventor: Ting, Kuei-Ping, 221 Taipei Hsien (TW); Yang, Chao-Kuang, 221 Taipei Hsien (TW)
(74) Representative: Becker Kurig Straus

(57) **Abstract**

Method of controlling an electronic device with a touch-sensitive display is provided. While the electronic device is in a user-interface lock state, an unlock image is displayed and contact with the unlock image on the touch-sensitive display is detected. In response to a detected contact on the unlock image, a circle with a predefined radius is displayed, and at least one functional icon is displayed on the boundary of the circle, wherein the unlock image serves as a center of the circle. The unlock image is displayed with an unchanged position while the detected contact is moving toward the functional icon. When the detected contact is moving toward the functional icon, a circular trapezoid is displayed and expands from an arc where the functional icon is placed, towards the outside of the circle. When the detected contact moves to and stops at the functional icon, the electronic device transitions from the user-interface lock state to a processing state, and a function corresponding to the functional icon is executed.

## Description

### CROSS REFERENCE TO RELATED APPLICATIONS

This application claims priority of U.S. Provisional Patent Application Ser. No. 61/555,823, filed 11/04/2011, entitled Method for Unlocking Screen Associated with Function Short-Cuts, and claims priority of Taiwan Patent Application Ser. No. 101105403, filed 2012/2/20, entitled ELECTRONIC DEVICE AND METHOD OF CONTROLLING THE SAME. The contents of these applications are hereby incorporated by reference.

### BACKGROUND OF THE INVENTION

### Field of the Invention

The disclosure relates generally to electronic devices and a method of controlling the same and, more particularly to unlocking of user interfaces on portable electronic devices by inputting preset gestures.

### Description of the Related Art

Recently, electronic devices, such as handheld devices, have become more and more technically advanced and multifunctional. Due to increased convenience and functions of the devices, these devices have become necessities of life. Using the electronic devices, users can make phone calls, as well as conduct social interactions and business transactions.

Touch screens are becoming more popular for use both as displays and as user input devices, especially for portable devices. Users may interact with the device through the touch screens. Such devices lock the touch screen after a certain period of idleness. A user has to unlock the device before he uses the device.

Devices may be unlocked by any of several well-known unlocking procedures, such as entering a password or conducting gestures (such as sliding or button combination) on the touch screen following a prompt being displayed on the touch screen. A function can be activated only after the unlocking procedure has been performed and the device has been switched to an unlocked state. For these unlocking procedures, password memorization can be burdensome and the button combination may be hard to perform. As a consequence, these drawbacks may reduce the ease of using such devices.

Accordingly, there is a need for more user-friendly procedures for unlocking such devices, and a method enabling users to directly activate applications of such devices under a locked state.

### BRIEF SUMMARY OF THE INVENTION

A method of controlling an electronic device with a touch-sensitive display and an electronic device are provided.

In an embodiment of a method of controlling an electronic device with a touch-sensitive display, when the electronic device is in a user-interface lock state, an unlock image is displayed and contact with the unlock image on the touch-sensitive display is detected. In response to a detected contact on the unlock image, a circle with a predefined radius is displayed, and at least one functional icon is displayed on the boundary of the circle, wherein the unlock image serves as a center of the circle. The unlock image is displayed with an unchanged position while the detected contact is moving toward the functional icon. When the detected contact is moving toward the functional icon, a circular trapezoid is displayed and expands from an arc where the functional icon is placed, towards the outside of the circle. When the detected contact moves to and stops at the functional icon, the electronic device switches from the user-interface lock state to a processing state, and a function corresponding to the functional icon is executed.

According to an embodiment, when the detected contact is moving away from the unlock image, the unlock image is displayed with an unchanged position with a reduced size, and the functional icon is displayed with an enlarged size.

According to an embodiment, when the detected contact is moving toward the functional icon, a sector position between the circular trapezoid and the unlock image is visually highlighted.

According to an embodiment, an icon of application software is displayed as the functional icon. When the detected contact moves to and stops at the functional icon, the electronic device executes the application software corresponding to the functional icon. On the other hand, when an unlock icon is displayed as the functional icon, and when the contact moves to and stops at the functional icon, the electronic device switches from the user-interface lock state to a user-interface unlock state.

An embodiment of an electronic device includes a touch-sensitive display and a controller. The touch-sensitive display displays graphics, text, and user-interface objects, and detects and responds to a contact on the touch-sensitive display. The controller, when the electronic device is in a user-interface lock state, controls the touch-sensitive display to display an unlock image and to detect a contact with the unlock image on the touch-sensitive display. In response to a detected contact on the unlock image, the controller controls the touch-sensitive display to display a circle with a predefined radius, and to display at least one functional icon on the boundary of the circle, wherein the unlock image serves as a center of the circle. The controller controls the touch-sensitive display to display the unlock image at an unchanged position while the detected contact is moving toward the functional icon. When the detected contact is moving toward the functional icon, the controller controls the touch-sensitive display to display and expand a circular trapezoid from an arc where the functional icon is placed, towards the outside of the circle. When the detected contact moves to and stops at the functional icon, the controller controls the electronic device to transition from the user-interface lock state to a processing state, and executes a function corresponding to the functional icon.

Method of controlling an electronic device with a touch-sensitive display, and related operating systems may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an electronic device of the invention;

Fig. 2 is a flowchart of an embodiment of a method of controlling an electronic device with a touch-sensitive display;

Figs. 3A-3G illustrate graphical user interface displays of an electronic device according to embodiments of the invention;

Figs. 4A∼4C illustrate graphical user interface displays of an electronic device according to embodiments of the invention.

### DETAILED DESCRIPTION OF THE INVENTION

Method of controlling an electronic device with a touch-sensitive display and electronic device are provided.

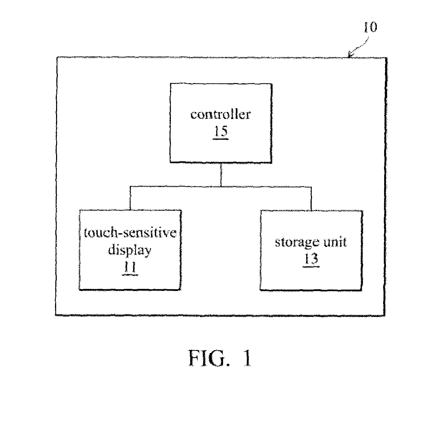

Fig. 1 is a schematic diagram illustrating an embodiment of an electronic device of the invention. According to an embodiment, an electronic device 10 can be a personal computer or portable electronic device, such as a PDA (Personal Digital Assistant), a mobile phone, a smart phone, and a mobile Internet Device (MID).

Electronic device 10 comprises a touch-sensitive display 11, a storage unit 13, and a controller 15.

The touch-sensitive display 11 has a touch-sensitive surface. The touch-sensitive display 11 can detect contact and movement of a control tool, such as a stylus or finger on the touch-sensitive surface. The touch-sensitive display 11 can display related graphics, data, and interfaces. Touch-sensitive display 11 receives inputs corresponding to user manipulation, and transmits the received input to the controller 15 for further processing.

The storage unit 13 stores user data, settings and software of the electronic device 10.

The controller 15 executes a method of controlling an electronic device with a touch-sensitive display of the invention. Related details are discussed later.

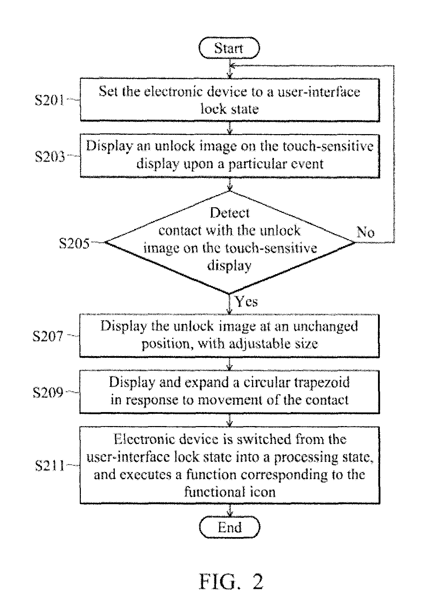

Fig. 2 is a flowchart of an embodiment of a method of controlling an electronic device with a touch-sensitive display. The method of controlling an electronic device with a touch-sensitive display can be used in an electronic device, including but not limited to a PDA (Personal Digital Assistant), a smart phone, a mobile phone, or the like. According to an embodiment, the electronic device is equipped with a touch-sensitive display.

In step S20 1, the electronic device 10 is set to a user-interface lock state.

In step S203, when the electronic device is in the user-interface lock state, an unlock image is displayed on the touch-sensitive display upon a particular event, such as user contact with the touch-sensitive display.

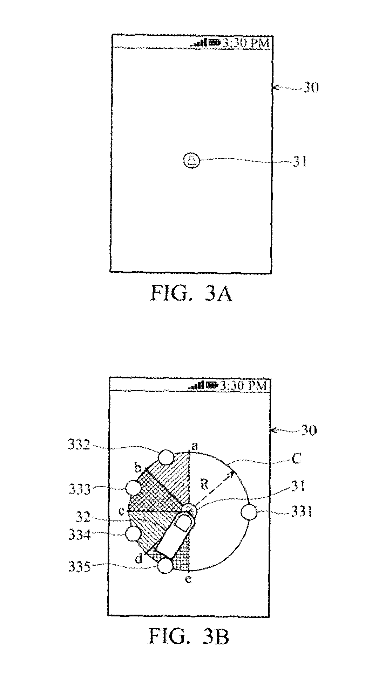

Referring to Fig. 3A, when the electronic device is in the user-interface lock state, an unlock image 31 is displayed on a screen 30 of the touch-sensitive display upon a particular event, such a user contact with the touch-sensitive display. According to an embodiment, the unlock image 31 is shown as a lock. It should be apparent that the invention is not limited to this example, and the unlock image 31 can be displayed as any design.

In step S205, contact with the unlock image on the touch-sensitive display is detected, and if so, the process proceeds to step S207, otherwise the process returns to step S201, setting the electronic device to the user-interface lock state.

In addition, in response to a detected contact on the unlock image, a circle with a predefined radius is displayed, and at least one functional icon is displayed on the boundary of the circle, wherein the unlock image serves as a center of the circle.

In step S207, the unlock image 31 is displayed with an unchanged position, with an adjustable size, wherein the size is adjusted in response to movement of the point of the user contact. For example, when the detected contact is moving away from the unlock image, the unlock image is displayed with an unchanged position and the unlock image is displayed with a reduced size, When the detected contact is moving toward the unlock image, the unlock image is displayed with an unchanged position and the unlock image is displayed with an enlarged size.

Referring to Fig. 3B, when a user uses his finger or other objects to make a contact on the unlock image 31, a circle C with a predefined radius R is displayed on the screen 30, and functional icons 331, 332, 333, 334 and 335 are displayed on the boundary of the circle C, wherein the unlock image 31 serves as a center of the circle C. In addition, according to positions on which the functional icons 331, 332, 333, 334 and 335 are displayed, the circle C is divided into several segments, wherein each of the segments is referred to as an arc, and each arc corresponds to one of the functional icons 331, 332, 333, 334 and 335. For example, arc ab corresponds to functional icon 332, arc be corresponds to functional icon 333, arc cd corresponds to functional icon 334, arc de corresponds to functional icon 335, and arc ea corresponds to functional icon 331.

According to this embodiment, a functional icon is an unlock icon, and functional icons 332, 333, 334 and 335 are icons of application software corresponding to different functions performed by respective application software.

In step S209, when the detected contact is moving toward the functional icon, a circular trapezoid is displayed and expands from an corresponding arc, on which the functional icon is placed, towards the outside of the circle.

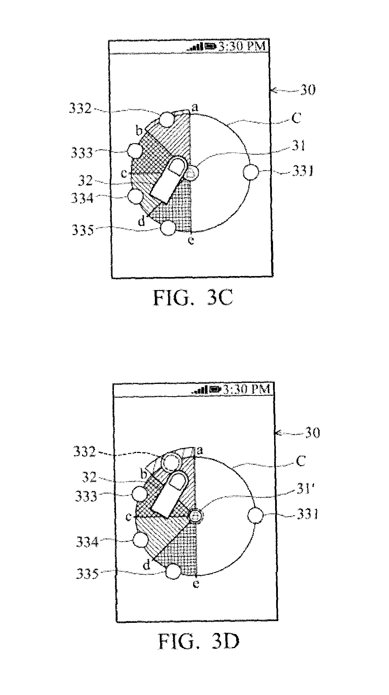

Referring to Fig. 3C and 3D, when a point of the contact made by a user's finger 32 moves from the unlock image 31 toward a boundary of the circle C (for example, from the unlock image 31 to a functional icon 332), a circular trapezoid (shown as a shadowed part) is displayed and expands from the arc ab, on which the functional icon is placed, towards the outside of the circle. In addition, progression of the expansion of the circular trapezoid continues as the finger 32 moves toward the exterior of the circle. For example, the circular trapezoid shown in Fig. 3C is gradually expanded to the wider circular trapezoid shown in Fig. 3D.

In addition, the unlock image is displayed with an unchanged position as movement of the continuous contact is in progression, i.e., while maintaining continuous contact.

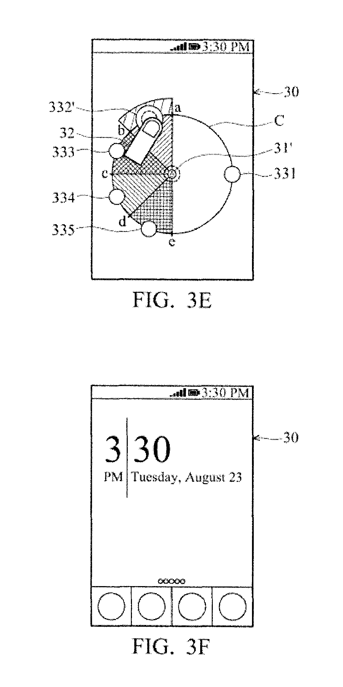

In this embodiment, size of the unlock image 31 can be changed in response to movement of the point of the contact while maintaining continuous contact. For example, when a finger 32 contacts with the unlock image 31, and the point of the contact made by the finger 32 moves away from the unlock image 31, the unlock image 31 is displayed with an unchanged position and the unlock image 31 is displayed with a reduced size. Referring to Fig. 3D and Fig. 3E, the circle of the dotted line at the location of the unlock image 31 represents an original size of the unlock image 31 shown in Fig. 3A, and a circle of the solid line represents the current size of the unlock image 31' in response to movement of the point of the contact made by a finger 32.

In addition, size of the functional icons 331, 332, 333, 334 and 335 can be changed in response to movement of the point of the contact while maintaining continuous contact. For example, when the point of the contact made by the finger 32 moves toward the functional icon, the functional icon is displayed with an enlarged size. For example, referring to Fig. 3E, the circle of the dotted line at the location of the functional icon 332 represents an original size of the functional icon 332 shown in Fig. 3A, and a circle of the solid line represents the current size of the functional icon 332' in response to movement of the point of the contact made by a finger 32.

Furthermore, when the detected point of the contact is moving toward the functional icon, a sector position between the circular trapezoid and the unlock image is visually highlighted.

For example, referring to Fig. 3B (as well as in Fig. 3C∼Fig. 3E), sectors positioning between unlock image 31 and arc ab, arc bc, arc cd, arc de, and arc ea are visually highlighted by, for example, different colors (shown as different screen tones in Fig. 3B-Fig. 3E).

In step S211, when the detected point of the contact moves to and stops at the functional icon, the electronic device switches from the user-interface lock state to a processing state, and executes a function corresponding to the functional icon.

Referring to Fig. 3E, according to this embodiment, when the detected point of the contact moves to and stops at the functional icon 332 (finger 32 moves from unlock image 31 to functional icon 332, and breaks the contact at the functional icon 332), the electronic device switches from the user-interface lock state to a processing state, and a function corresponding to the functional icon is executed, and a corresponding user interface is provided on the screen.

For example, the functional icons 332, 333, 334 and 335 are icons representing application software corresponding to different functions performed by respect application software. For example, for the functional icon 332 corresponding to an Internet search engine application, when the detected contact moves to and stops at the functional icon 332, the electronic device switches from the user-interface lock state, executes the Internet search engine application and provides a graphical user interface display as shown in Fig. 3F.

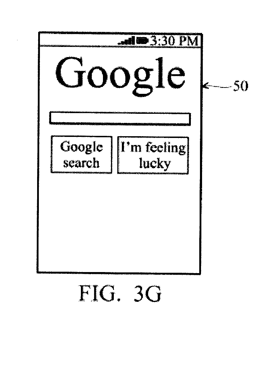

In addition, the functional icon 331 can be an unlock icon. When the detected point of the contact moves to and stops at the functional icon 331, the electronic device is controlled to transition from the user-interface lock state to a user-interface unlock state, and provides a graphical user interface display as shown in Fig. 3G. In the user-interface unlock state, a user can initiate an application in the electronic device to make a phone call, to establish connection to the Internet, and the like.

For the foregoing description, for purpose of explanation, reference to specific embodiments have been described. However, the illustrative discussions above are not intended to be exhaustive or to limit the invention to the precise forms disclosed.

For example, in the step S207 described above, when the detected contact is moving away from or toward the unlock image, the unlock image is displayed with an unchanged position with reduced or enlarged size. It can also be implemented as the display of the unlock image 31 remains unchanged. For example, when the point of the contact (made by a user's finger 42) moves away from a center of the circle, the display of the unlock image 31 remains unchanged, i.e., without any transformation, such as enlargement, shrinkage, or the like. In addition, when the point of the contact moves to the exterior of the boundary of the unlock image 31 (such as the point of the contact moves to a position away from the unlock image 31 by 3 pixels), a gaping void appears at the graphical user interface from the center of the circle.

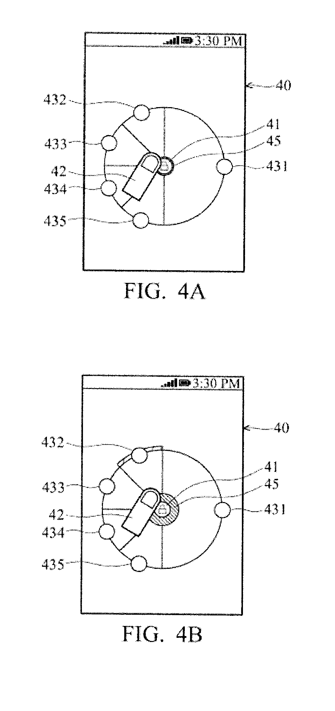

Referring to Fig. 4A, when the point of the contact (made by a user's finger 42) moves away from center of the circle, the display of the unlock image 41 remains unchanged without any transformation, and instead, a gaping void appears at the graphical user interface from the center of the circle (as shown by the shadowed area 45).

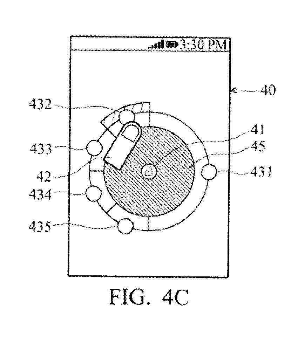

Furthermore, progression of the expansion of the gaping void continues as the finger 32 moves toward the exterior of the circle. Referring to Fig. 4B and Fig. 4C, the shadowed area 45 expands as the finger moves away from the center of the circle.

In addition, as shown in Fig. 4B and Fig. 4C, progression of the expansion of the circular trapezoid continues as the finger 42 moves toward the exterior of the circle. For example, the circular trapezoid shown in Fig. 4B is gradually expanded to the wider circular trapezoid shown in Fig. 4C.

Methods of controlling an electronic device, and related operating systems, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method for controlling an electronic device with a touch-sensitive display, comprising:
while the electronic device is in a user-interface lock state, displaying an unlock image and detecting a contact with the unlock image on the touch-sensitive display;
in response to a detected contact on the unlock image, displaying a circle with a predefined radius, and displaying at least one functional icon on the boundary of the circle, wherein the unlock image serves as a center of the circle;
displaying the unlock image at an unchanged position while the detected contact is moving toward the functional icon;
while the detected contact is moving toward the functional icon, displaying and expanding a circular trapezoid from an arc where the functional icon is placed, towards the outside of the circle; and
when the detected contact moves to and stops at the functional icon, controlling the electronic device to be switched from the user-interface lock state into a processing state, and executing a function corresponding to the functional icon.

2. The method of claim 1, wherein:
when the detected contact is moving away from the unlock image, displaying the unlock image at an unchanged position and displaying the unlock image with a reduced size; or
when the detected contact is moving toward the unlock image, displaying the unlock image at an unchanged position and displaying the unlock image with an enlarged size; or
when the detected contact is moving toward the functional icon, visually highlighting a sector position between the circular trapezoid and the unlock image.

3. The method of claim 2, further comprising highlighting the sector by displaying the sector as a colored area.

4. The method of claim 1, further comprising displaying an icon of an application software as the functional icon, and when the detected contact moves to and stops at the functional icon, controlling the electronic device to execute application software corresponding to the functional icon.

5. The method of claim 1, further comprising displaying an unlock icon as the functional icon, and when the contact moves to and stops at the functional icon, controlling the electronic device to be switched from the user-interface lock state into a user-interface unlock state.

6. The method of claim 1, further comprising displaying a plurality of icons of application software and an unlock icon on the circle as the functional icons.

7. The method of claim 6, wherein the arc on which the unlock icon is placed is longer than an arc corresponding to the application software.

8. An electronic device, comprising:
a touch-sensitive display; and
a controller, when the electronic device is in a user-interface lock state, the controller is arranged for controlling the touch-sensitive display to display an unlock image and to detect a contact with the unlock image on the touch-sensitive display;
in response to a detected contact on the unlock image, the controller is arranged for controlling the touch-sensitive display to display a circle with a predefined radius, and to display at least one functional icon on the boundary of the circle, wherein the unlock image serves as a center of the circle;
the controller is arranged for controlling the touch-sensitive display to display the unlock image at an unchanged position while the detected contact is moving toward the functional icon;
while the detected contact is moving toward the functional icon, the controller is arranged for controlling the touch-sensitive display to display and expand a circular trapezoid from an arc where the functional icon is placed, towards the outside of the circle; and
when the detected contact moves to and stops at the functional icon, the controller is arranged for controlling the electronic device to be switched from the user-interface lock state into a processing state, and executing a function corresponding to the functional icon.

9. The electronic device of claim 8, wherein when the detected contact is moving away from the unlock image, the controller is arranged for controlling the touch-sensitive display to display the unlock image at an unchanged position and to display the unlock image with a reduced size; or when the detected contact is moving toward the unlock image, the controller is arranged for controlling the touch-sensitive display to display the unlock image at an unchanged position and to display the unlock image with an enlarged size.

10. The electronic device of claim 8, wherein when the detected contact is moving toward the functional icon, the controller is arranged for controlling the touch-sensitive display to visually highlight a sector position between the circular trapezoid and the unlock image.

11. The electronic device of claim 10, wherein the controller is arranged for controlling the touch-sensitive display to highlight the sector by displaying the sector as a colored area.

12. The electronic device of claim 8, wherein the controller is arranged for controlling the touch-sensitive display to display an icon of an application software as the functional icon, and when the detected contact moves to and stops at the functional icon, the controller is arranged for executing the application software corresponding to the functional icon.

13. The electronic device of claim 8, wherein the controller is arranged for controlling the touch-sensitive display to display an unlock icon as the functional icon, and when the contact moves to and stops at the functional icon, the controller is arranged for controlling the electronic device to be switched from the user-interface lock state into a user-interface unlock state.

14. The electronic device of claim 8, wherein the controller is arranged for controlling the touch-sensitive display to display a plurality of icons of application software and an unlock icon on the circle as the functional icons.

15. The electronic device of claim 14, the controller is arranged for controlling the touch-sensitive display to display the arc, on which the unlock icon is placed, longer than an arc corresponding to the application software.
